# EUROPÄISCHE PATENTANMELDUNG

(11) **EP 1 515 419 A2**
(43) Veröffentlichungstag der Anmeldung: **16.03.2005**
(21) Anmeldenummer: 04012970.2
(22) Anmeldetag: 02.06.2004
(51) Int. Cl.: H02K 15/03, H02K 11/00

(54) **Verfahren zur Magnetisierung von Magnetelementen für eine elektrische Maschine**

(30) Priorität: 05.09.2003 DE 10340939
(71) Anmelder: ROBERT BOSCH GMBH, 70442 Stuttgart (DE)
(72) Erfinder: Baumann, Rolf, 77815 Buehl (DE); Wehrle, Andreas, 77770 Durbach (DE)

(57) **Zusammenfassung**

Die vorliegende Erfindung betrifft ein Verfahren zur Magnetisierung von Magnetelementen für eine elektronisch kommutierte elektrische Maschine, welche ein Arbeitsmagnetelement (3) und ein Sensormagnetelement (4) umfasst, wobei das Arbeitsmagnetelement (3) und das Sensormagnetelement (4) gleichzeitig magnetisiert werden. Weiterhin betrifft die Erfindung eine elektrische Maschine, umfassend Magnetelemente, welche gemäß dem erfindungsgemäßen Verfahren magnetisiert wurden.

## Beschreibung

### Stand der Technik

Die vorliegende Erfindung betrifft ein Verfahren zur Magnetisierung von Magnetelementen für eine elektronisch kommutierte elektrische Maschine, wie z.B. einen EC-Motor oder EC-Generator. Weiterhin betrifft die Erfindung eine elektrische Maschine, umfassend Magnetelemente, welche gemäß dem erfindungsgemäßen Verfahren magnetisiert wurden.

Permanent erregte EC-Motoren oder EC-Generatoren werden in jüngster Zeit verstärkt verwendet. Derartige EC-Maschinen sind häufig derart ausgebildet, dass auf einer Rotorwelle ein Arbeitsmagnetelement und ein Sensormagnetelement angeordnet ist. Hierbei werden bisher das auf die Rotorwelle montierte Arbeitsmagnetelement zusammen mit der Rotorwelle magnetisiert. Das Sensormagnetelement ist üblicherweise ein kunststoffgebundener Magnet, der vor der Montage bereits separat magnetisiert wurde. Anschließend werden die beiden Magnetelemente auf eine Rotorwelle montiert. Vor der endgültigen Fixierung der beiden Magnetelemente auf der Rotorwelle müssen jedoch aufwendige Justagevorgänge ausgeführt werden, um die beiden Magnetelemente zueinander auszurichten, um die elektrische Maschine mit einem hohen Wirkungsgrad betreiben zu können. Insbesondere müssen die Polteilungen des Arbeitsmagnetelements mit den Polteilungen des Sensormagnetelements übereinstimmen. Da häufig beispielsweise zwölfpolige elektrische EC-Maschinen verwendet werden, haben schon kleinste Toleranzabweichungen einen großen negativen Einfluss auf den Gesamtwirkungsgrad. Daher ist bei der Herstellung der EC-Maschinen auch eine aufwendige Qualitätssicherung notwendig.

### Vorteile der Erfindung

Beim erfindungsgemäßen Verfahren zur Magnetisierung von Magnetelementen für elektrische Maschinen mit den Merkmalen des Patentanspruchs 1 ist demgegenüber von Vorteil, dass vollständig auf die aufwendige Feinjustage nach der Montage der Magnetelemente verzichtet werden kann. Dies wird erfindungsgemäß dadurch erreicht, dass das Arbeitsmagnetelement und das Sensormagnetelement gleichzeitig magnetisiert werden. Dies ergibt den großen fertigungstechnischen Vorteil, dass insbesondere hinsichtlich der Polteilung des Arbeitsmagnetelements und des Sensormagnetelements keine Verdrehung vorhanden ist. Dadurch kann auf einfache, schnelle und kostengünstige Weise die Magnetisierung der Magnetelemente der elektrischen Maschine ausgeführt werden. Hierdurch lassen sich insbesondere bei der für die elektrische Maschine durchgeführten Massenproduktion große herstellungsbedingte Vorteile und Kosteneinsparungen realisieren.

Die Die Unteransprüche zeigen bevorzugte Weiterbildungen der Erfindung.

Bevorzugt werden das Arbeitsmagnetelement und das Sensormagnetelement unmagnetisiert auf ein Bauteil der elektrischen Maschine montiert und die beiden Magnetelemente werden dann in ihrer endgültigen Montageposition gleichzeitig magnetisiert.

Vorzugsweise ist das Bauteil der elektrischen Maschine, auf welche das Arbeitsmagnetelement und das Sensormagnetelement vor ihrer Magnetisierung montiert werden, die Rotorwelle.

Besonders bevorzugt enthält das Sensormagnetelement und/oder das Arbeitsmagnetelement als magnetisierbare Bestandteile ein Seltene-Erden-Material oder die magnetisierbaren Teile des Sensormagnetelements sind vollständig aus Ferrit hergestellt. Vorzugsweise ist dieses Magnet-Material dabei in einen Kunststoff eingebettet. Als Seltene-Erden-Material wird besonders bevorzugt Neodym-Eisen-Bor (NdFeB) als magnetisierbares Material verwendet.

Die Magnetisierung des Sensormagnetelements und des Arbeitsmagnetelements wird vorzugsweise radial orientiert oder zirkular orientiert ausgeführt. Insbesondere bei der radialen Magnetisierung wird ein magnetisierender Rückschlussring verwendet, wobei insbesondere auch die Rotorwelle für einen magnetischen Rückschluss verwendet werden kann. Ein anderes Verfahren zur Magnetisierung ist das so genannte Hallbach-Magnetisieren für eine zirkulare Orientierung der Magnetelemente

Bei der Herstellung anisotroper Magnete wird der Verlauf der Feldlinien eingeprägt. Das bedeutet, dass bei anisotropen Magneten die Fe- oder die NdFeB-Teilchen dem Feldverlauf entsprechend vorausgerichtet werden. Hierdurch können radiale und auch zirkular gerichtete Teilchenorientierungen eingeprägt werden. Werden die Teilchen anisotrop (ausgerichtet) im Gegensatz zu isotrop (unausgerichtet) eingebunden, erhöht sich die Feldstärke um bis zu ca. 40% als bei den isotropen Magneten. Bei der Wahl des Materials für das Sensormagnetelement weist z.B. ein isotroper kunststoffgebundener Magnet aus NdFeB eine größere Feldstärke auf als ein kunststoffgebundener Magnet mit Fe. Aufgrund der höheren Remanenz ist der kunststoffgebundene Magnet aus NdFrB als Sensormagnetelement trotzdem noch geeignet. Ein anisotropes, kunststoffgenbundenes Magnetelement aus Fe ist im Gegensatz zum isotropen bedingt durch die höhere Remanenz für die vorliegende Anwendung dennoch geeignet. Da das Sensormagnetelement aus Fe deutlich kostengünstiger ist als eines mit NdFeB, wird vorzugsweise ein Sensormagnetelement mit kunststoffeingebundenen Eisenmaterialien verwendet.

Weiterhin betrifft die vorliegende Erfindung eine elektrische Maschine mit einem Arbeitsmagnetelement und einem Sensormagnetelement, welche gemäß einem der oben genannten Verfahren gleichzeitig in ihrer Endmontagestellung hergestellt wurden. Die erfindungsgemäße elektrische Maschine ist insbesondere als EC-Motor oder EC-Generator ausgebildet und wird in Fahrzeugen, insbesondere als EC-Motor zum Antrieb von Komforteinrichtungen des Fahrzeugs, wie z.B. elektrischen Fensterhebern, elektrischen Schiebedächern, elektrischer Sitzverstellung usw. oder als Wischermotor, verwendet.

### Zeichnung

Nachfolgend wird unter Bezugnahme auf die Zeichnung ein Ausführungsbeispiel der Erfindung im Detail beschrieben. In der Zeichnung ist:

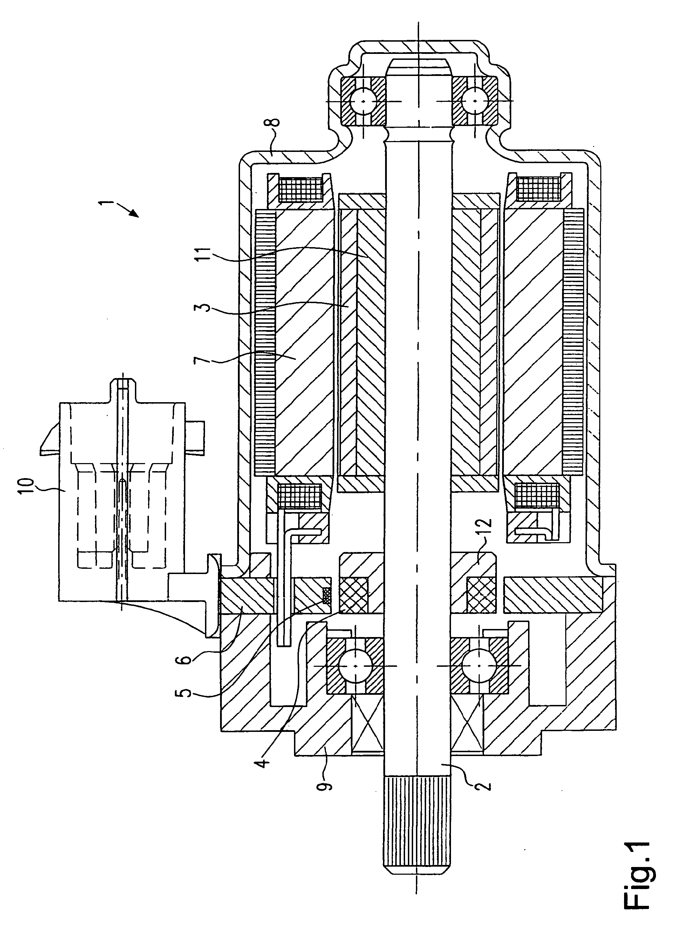

- Figur 1: eine schematisch Schnittansicht einer elektrischen Maschine, in welcher Magnetelemente verwendet werden, die gemäß einem erfindungsgemäßen Verfahren magnetisiert wurden.

### Beschreibung des Ausführungsbeispiels

Nachfolgend wird unter Bezugnahme auf Figur 1 ein Ausführungsbeispiel der vorliegenden Erfindung beschrieben.

Figur 1 zeigt eine Schnittansicht einer elektrischen Maschine (1), welche Magnetelemente verwendet, die gemäß dem erfindungsgemäßen Verfahren magnetisiert wurden. Die elektrische Maschine (1) ist ein elektronisch kommutierter Motor, welcher eine Rotorwelle (2) und einen Stator (7) umfasst. Der Stator ist in einem Poltopf (8) angeordnet und ein offenes Ende des Poltopfes wird durch ein Lagerschild (9) in bekannter Weise abgedeckt. Die Rotorwelle (2) ist einerseits am Ende des Poltopfes (8) gelagert und andererseits am Lagerschild (9). Auf der Rotorwelle (2) ist weiterhin ein Arbeitsmagnetelement (3) angeordnet, welches im Wesentlichen hohlzylindrisch ausgebildet ist, wobei zwischen dem Arbeitsmagnetelement (3) und der Rotorwelle (2) ein Rückschlussring (11) angeordnet ist.

Um im Betrieb die Stellung des Arbeitsmagnetelements (3) bestimmen zu können, ist weiterhin auf der Rotorwelle (2) ein Sensormagnetelement (4) angeordnet, welches mittels eines Sensors (5) abgetastet wird. Der Sensor (5) ist in einem Sensorträger (6) befestigt. Weiterhin ist ein Stecker (10) für eine Stromversorgung des EC-Motors vorgesehen.

Die elektrische Maschine (1) wurde nun derart hergestellt, dass in einem ersten Schritt das Arbeitsmagnetelement (3) mit dem Rückschlussring (11) auf die Rotorwelle (2) montiert wurde und ebenfalls das Sensormagnetelement (4) auf die Rotorwelle (2) montiert wurde. Wie in Figur 1 gezeigt, ist das Sensormagnetelement (4) ebenfalls ringförmig ausgebildet und ist über ein Rückschlusselement (12) an der Rotorwelle (2) befestigt. Hierbei sind das Arbeitsmagnetelement (3) und das Sensormagnetelement (4) jeweils in unmagnetisierter Weise auf die Rotorwelle (2) montiert.

Das Sensormagnetelement (4) ist aus einem kunststoffgebundenen Werkstoff hergestellt. Genauer ist das Sensormagnetelement (4) als kunststoffgebundener Magnet mit NdFeB- oder Fe-magnetisierenden Anteilen hergestellt. Aufgrund seiner Materialzusammensetzung weist das Sensormagnetelement (4) somit erheblich geringere Feldstärken als das Arbeitsmagnetelement (3) auf.

Nachdem die beiden Magnetelemente (3) und (4) auf die Rotorwelle (2) montiert wurden, werden die beiden Magnetelemente (3, 4) gemeinsam magnetisiert. Hierbei wird vorzugsweise eine radiale Magnetisierung durchgeführt, wobei beispielsweise die Rotorwelle (2) als Rückschlusselement fungiert. Es hat sich herausgestellt, dass bei einer radialen Magnetisierung der beiden Magnetelemente (3, 4) die geringsten Fehlerquellen auftreten. Aufgrund der gemeinsamen Magnetisierung von Arbeitsmagnetelement (3) und Sensormagnetelement (4) kann auf die im Stand der Technik notwendige Feinjustierung der beiden Magnetelemente zueinander verzichtet werden. Dadurch kann die erfindungsgemäße elektrische Maschine deutlich kostengünstiger und in kürzerer Herstellungszeit hergestellt werden. Weiterhin ist bei der Montage der beiden Magnetelemente keine Bezugszuordnung zur Rotorwelle notwendig, um die Polteilung der Magnetelemente an definierten Stellen relativ zur Rotorwelle zu halten.

Somit wird erfindungsgemäß eine elektrische Maschine (1) erhalten, welche im Vergleich mit dem Stand der Technik einen signifikant besseren Wirkungsgrad bei geringeren Herstellkosten aufweist. Durch die gemeinsame Magnetisierung der beiden Magnetelemente (3, 4) kann weiterhin eine gleichbleibend hohe Qualität bei der Herstellung der elektrischen Maschine sichergestellt werden.

## Patentansprüche

1. Verfahren zur Magnetisierung von Magnetelementen für eine elektronisch kommutierte elektrische Maschine, welche ein Arbeitsmagnetelement (3) und ein Sensormagnetelement (4) umfasst, **dadurch gekennzeichnet, dass** das Arbeitsmagnetelement (3) und das Sensormagnetelement (4) gleichzeitig magnetisiert werden.

2. Verfahren nach Anspruch 1, **dadurch gekennzeichnet, dass** das Arbeitsmagnetelement (3) und das Sensormagnetelement (4) vor der Magnetisierung auf ein gemeinsames Bauteil der elektrischen Maschine montiert werden.

3. Verfahren nach Anspruch 2, **dadurch gekennzeichnet, dass** das gemeinsame Bauteil eine Rotorwelle (2) der elektrischen Maschine ist.

4. Verfahren nach einem der vorhergehenden Ansprüche, **dadurch gekennzeichnet, dass** das Sensormagnetelement (4) als magnetisierbare Bestandteile ein Seltene-Erden-Material enthält, oder dass das Sensormagnetelement als magnetisierbare Bestandteile ausschließlich Eisen (Fe) enthält.

5. Verfahren nach Anspruch 4, **dadurch gekennzeichnet, dass** das magnetisierende Material des Sensormagnetelements (3) in Kunststoff eingebettet ist.

6. Verfahren nach Anspruch 4, **dadurch gekennzeichnet, dass** das Sensormagnetelement (3) und/oder das Arbeitsmagnetelement (4) ein reiner Eisenmagnet oder ein Seltene-Erde-Magnet ist.

7. Verfahren nach einem der Ansprüche 4 bis 6, **dadurch gekennzeichnet, dass** das Seltene-Erden-Material Neodym-Eisen-Bor (NdFeB) ist.

8. Verfahren nach einem der vorhergehenden Ansprüche, **dadurch gekennzeichnet, dass** die gleichzeitige Magnetisierung des Arbeitsmagnetelements (3) und des Sensormagnetelements (4) radial orientiert oder zirkular orientiert ausgeführt wird.

9. Elektrische Maschine (1), umfassend ein Arbeitsmagnetelement (3) und ein Sensormagnetelement (4), welche nach einem Verfahren gemäß einem der vorhergehenden Ansprüche magnetisiert wurden.

10. Elektrische Maschine nach Anspruch 9, **dadurch gekennzeichnet, dass** die elektrische Maschine als EC-Motor oder EC-Generator ausgebildet ist.

11. Elektrische Maschine nach Anspruch 9 oder 10, **dadurch gekennzeichnet, dass** die elektrische Maschine in Fahrzeugen verwendet wird.
